# EUROPÄISCHE PATENTSCHRIFT

(11) **EP 0 386 486 B1**
(45) Veröffentlichungstag und Bekanntmachung des Hinweises auf die Patenterteilung: **16.06.1993**
(21) Anmeldenummer: 90102445.5
(22) Anmeldetag: 08.02.1990
(51) Int. Cl.: C23C 28/00, C23C 22/74

(54) **Bauteil aus einer Titanlegierung mit einer Schutzschicht**
Titanium alloy component with a protection layer
Pièce en alliage de titane avec une couche de protection

(30) Priorität: 28.02.1989 DE 3906187; 08.08.1989 DE 3926151
(43) Veröffentlichungstag der Anmeldung: 12.09.1990
(73) Patentinhaber: MTU MOTOREN- UND TURBINEN-UNION MÜNCHEN GMBH, D-80976 München (DE)
(72) Erfinder: Grunke, Richard, D-8000 München 70 (DE); Peichl, Lothar, D-8060 Dachau (DE); Puchinger, Franz, D-8068 Niederscheyern (DE); Wydra, Gerhard, F-8042 Oberschleissheim (DE)

(56) Entgegenhaltungen:
- EP-A- 0 242 100
- EP-A- 0 291 702
- GB-A- 1 258 405
- MANUFACTURING TECHNOLOGY NOTE, US ARMY MATERIEL DEVELOPMENT AND READINESS COMMAND, Report Nr. Tr76-4, Filling Code: 71E-006, Dezember 1977, Alexandria, Virginia, US; "Erosion-resistant coating for titanium"

## Beschreibung

Die Erfindung betrifft ein Bauteil aus einer Titanlegierung mit einer Schutzschicht und ein Verfahren zur Herstellung der Schutzschicht.

Titanlegierungen sind aufgrund ihres günstigen Verhältnisses zwischen Festigkeit, insbesondere Schwingfestigkeit und Gewicht, ein bevorzugter Werkstoff im Triebwerksbau. Die Einsatztemperatur ist jedoch begrenzt, da bei Temperaturen über 550 °C bereits eine verstärkte Oxidation und Korrosion auftreten. Durch örtliche Überhitzung kann sich Titanfeuer (Verbrennung des Werkstoffs unter Abspaltung von glühenden, teilweise schmelzflüssigen Titanpartikeln) bilden und ausbreiten.

Aus der DE-A- 3 742 944 ist ein Verfahren zur Herstellung einer Oxidationsschutzschicht bekannt, die durch Diffusion von Aluminium und Niob in die Oberfläche das Titan vor Oxidation schützt und durch Bildung von intermetallischen Phasen härtet, so daß die Verschleißfestigkeit verbessert wird. Derartige diffusionsbeschichtete oder auch alitierte Titanbauteile haben den Nachteil, daß durch die Oberflächenhärtung mittels intermetallischer Phasen der Werkstoff versprödet und die Schwingfestigkeit bis zu 30 % herabgesetzt wird. Einen wirksamen Schutz gegen Titanfeuer oder Titanfeuerausbreitung bilden diese Alitierungsschichten nicht. Die gleichen Nachteile zeigen verschleißfeste Schutzschichten gemäß DE-A- 3 321 231, bei denen Nickel in den Grundwerkstoff eindiffundiert und mit Titan verschleißfeste, versprödende, intermetallische Phasen bildet. Bekannt sind auch Platinschichten auf Titanbauteilen, die aber keinen wirksamen Schutz gegen Titanfeuer bilden.

Da diese Schutzschichten äußerst dünn (< 2 µm dick) und hart sind, besteht die Gefahr, daß bereits bei minimaler mechanischer Einwirkung der Grundwerkstoff in Mikrobereichen freigelegt wird und bei örtlicher Überhitzung, wie sie beispielsweise in Verdichtern für Gasturbinen auftreten kann, ein Titanfeuer ausgelöst wird und Titanschmelztropfen durch den Verdichter aufgrund der hohen Strömungsgeschwindigkeit geschleudert werden, so daß nachfolgende Titanoberflächen beschädigt werden und die beschädigten Bauteile verbrennen, was zum Ausfall beispielsweise eines gesamten Triebwerks führen kann.

Aufgabe der Erfindung ist es, ein Bauteil aus einer Titanlegierung mit einer Multifunktionsschutzschicht zu schaffen und ein Verfahren zu ihrer Herstellung anzugeben. Die Schicht soll vor allem folgende Schutzeigenschaften aufweisen: titanfeuerhemmend, diffusionshemmend und oxidationsbeständig.

Gelöst wird diese Aufgabe, soweit es ein Bauteil mit einer Schutzschicht betrifft, durch eine auf der Bauteiloberfläche befindliche, diffusionshemmende und oxidationsbeständige Grundschicht aus Metallen und/oder Salzen, eine darüberliegende, titanfeuerhemmende Mittelschicht aus einem Hochtemperaturlack auf Aluminiumbasis und eine passivierende Deckschicht.

Die erfindungsgemäße Schutzschicht hat den Vorteil , daß sich einzelne Schutzfunktionen auf unterschiedliche Lagen der Schutzschicht verteilen. Darüber hinaus bilden alle drei Lagen eine Schutzschicht, die vorteilhafte Eigenschaften wie Korrosionsbeständigkeit, Erosionsbeständigkeit, Verschleißfestigkeit und Chloridbeständigkeit besitzt, die jede einzelne Lage für sich auf einer Titanoberfläche nicht entwickelt, sondern nur im Zusammenwirken der Lagen erbracht werden.

Bildet sich bei einer örtlichen Überhitzung ein Titanfeuer im Mikrobereich der Titanoberfläche, so wird es durch die relativ dicke Mittelschicht, die im wesentlichen aus Aluminium besteht, gelöscht.

Zur Löschung von Titanfeuer haben sich vorzugsweise Schichtdicken für die Mittelschicht aus einem Hochtemperaturlack auf Aluminiumbasis von 10 bis 2000 µm bewährt, wobei die Dicke dem Gefährdungsgrad durch Titanfeuer angepaßt werden kann. In besonders gefährdeten Bereichen wie Nuten, Fugen und Rillen mit Hochtemperaturbelastung wird die diffusionshemmende Schicht dicker ausgebildet als in Bereichen geringerer Temperaturbelastung.

Eine nachteilige Versprödung der Titanoberfläche kann durch eine diffusionshemmende Schicht unmittelbar auf der Titanoberfläche verhindert werden, da keine Atome wie beispielsweise Nickel oder Aluminium die Diffusionsbarriere passieren und sich deshalb an der Oberfläche des Grundwerkstoffes keine zusätzlichen intermetallischen Phasen mit Titan bilden können. Das günstige Verhältnis zwischen Schwingfestigkeit und Gewicht für Titanlegierungen bleibt dadurch vorteilhaft erhalten.

Eine bevorzugte Diffusionssperre bilden Titanphosphate und Titanchromate auf der Titanoberfläche, da sie mittels Phosphorsäure und Chromsäure gebildet werden und diese Salze eine Diffusion von Aluminium oder Nickel vorteilhaft verhindern. Durch die Wechselwirkung zwischen diesen Salzen und oberflächennahen Metallen der Titanlegierung wird vorteilhaft ein diffusionshemmende und oxydationsbeständige Schicht aufgebaut.

Eine weitere bevorzugte Ausführung der Erfindung setzt als Diffusionsbarriere mindestens eines der Elemente Molybdän, Tantal, Wolfram, Palladium, Niob oder Platin schichtförmig ein. Diese Übergangsmetalle haben den Vorteil, daß sie oxidationsbeständig sind oder oxidationsbeständige Überzüge in oxidhaltiger Umgebung bilden, so daß die Titan-oberfläche vor unerwünschter Oxidation vorteilhaft geschützt ist.

Damit derartige diffusionshemmende Schichten duktil und elastisch bleiben und die Festigkeitseigenschaften des Grundwerkstoffes nicht verschlechtern, weisen sie eine Schichtdicke von 0,2 - 10 µm vorzugsweise von 0,2 bis 2 µm auf.

Durch eine Deckschicht aus vorzugsweise Chromphosphat wird die titanfeuerhemmende Schicht vorteilhaft passiviert und versiegelt sowie vor chemischer Korrosion, beispielsweise durch Chloride, geschützt. Außerdem hat die Deckschicht eine glättende Wirkung und füllt verbliebene Poren der titanfeuerhemmenden Mittelschicht.

Die Deckschicht ist vorzugsweise 1 bis 10 µm dick, wobei sie vorteilhaft Oberflächenunebenheiten wie Poren und Welligkeiten bis 50 µm Tiefe ausgleicht.

Eine Deckschicht vorzugsweise aus Silikaten oder Titan- oder Siliziumoxiden mit hochtemperaturfesten Pigmenten hat den Vorteil, daß sie frei von Phosphaten ist und damit die Gefahr einer Bildung oder Abspaltung von brennbaren und giftigen Phosphorwasserstoffverbindungen vermieden wird.

Ein weiterer Vorteil ist, daß die Ausgangssubstanzen für diese Deckschicht, nämlich Silikat, Titanate oder Silikone vorzugsweise als Binder des Lackes für die anorganische Hochtemperaturlackschicht auf Aluminiumbasis einsetzbar sind, so daß vorteilhaft auch die titanfeuerhemmende Mittelschicht phosphatfrei bleibt.

Lediglich für die Bildung einer diffusionshemmenden Grundschicht aus vorzugsweise Titanchromat und Titanphosphat ist noch ein Binder aus Chromphosphat und Aluminiumphosphat gelöst in einer wässrigen Lösung von Chrom- und Phosphatsäure für den anorganischen Hochtemperaturlack erforderlich.

Durch eine Deckschicht aus vorzugsweise Silikaten oder Titan- oder Siliziumoxid mit hochtemperaturfesten Pigmenten wird die titanfeuerhemmende Schicht vorteilhaft passiviert und versiegelt sowie vor chemischer Korrosion, beispielsweise durch Chloride, geschützt. Außerdem hat die Deckschicht eine glättende Wirkung und füllt verbliebene Poren der titanfeuerhemmenden Mittelschicht.

Der Verschleißschutz dieser Schutzschicht für Titanlegierungen besteht im Gegensatz zu der in DE-A- 3 321 231 offenbarten Nickeldiffusionsschicht nicht darin, daß eine Oberfläche gehärtet wird und damit nachteilig die Dauerschwingfestikeit des beschichteten Grundwerkstoffes herabgesetzt wird, sondern darin, daß eine relativ dicke und duktile Schicht aus im wesentlichen Aluminium aufgebracht wird, die anstelle des Grundkwerkstoffes verschleißt. Mit der Dicke der Schicht ist vorteilhaft die Lebensdauer des Verschleißschutzes einstellbar, was die Dauerschwingfestigkeit des Grundwerkstoffes nicht beeinträchtigt.

Die Aufgabe, ein Verfahren zur Herstellung einer Schutzschicht für Titanlegierungen mit einerDeckschicht aus Chromphosphat anzugeben, wird durch mehrere zeitlich aufeinanderfolgende Verfahrensschritte gelöst:
a) Herstellung einer diffusionshemmenden und oxydationsbeständigen Grundschicht aus Salzen und/oder Metallen,
b) Auftragen einer anorganischen Hochtemperaturlackschicht auf Aluminiumbasis,
c) Einbrennen der anorganischen Hochtemperaturlackschicht zu einer titanfeuerhemmenden Mittelschicht,
d) Auftragen einer Chromphosphat-Phosphorsäure-Emulsion,
e) Trocknen der Chromphosphat-Phosphorsäure-Emulsion zu einer passivierenden Deckschicht.

Dieses Verfahren hat den Vorteil, daß es kostengünstig ist und sich für die Massenfertigung besonders vorteilhaft einsetzen läßt.

In einem bevorzugten Verfahren zur Herstellung der diffusionshemmenden und oxydationsbeständigen Grundschicht wird zunächst eine Aluminiumdiffusionsschicht eingebracht und anschließend eine anorganische Hochtemperaturschicht auf Aluminiumbasis mit einem Chromphosphat-Phosphorsäure-Binder aufgetragen und für 10 bis 20 Minuten bei 70 °C- 90 °C vorgetrocknet. Bei einer Luftfeuchtigkeit von 70 %- 90 % und einer Temperatur von Raumtemperatur bis 100 °C wird anschließend das Titanbauteil für 8 bis 60 Stunden zur Bildung einer diffusionshemmenden Titanchromat- und Titanphosphat-Schicht an der Titanoberfläche unter Luft in einer Klimakammer gelagert. Die hohe Luftfeuchtigkeit vergrößert vorteilhaft die Reaktionsgeschwindigkeit ebenso wie eine erhöhte Temperatur. Das Aluminium, das der Chrom- und der Phosphorsäure im anorganischen Hochtemperaturlack zugesetzt wird, zeigt eine katalytische Wirkung für die Bildung derartiger Schichten aus Titanchromaten und Titanphosphaten. Dieses Verfahren zur Herstellung einer diffusionshemmenden und oxydationsbeständigen Grundschicht an der Titanoberfläche ist äußerst kostengünstig, da es nur geringe Anlageninvestitionen erfordert und sich für die Massenfertigung bei entsprechender Lagerkapazität der Klimakammern eignet.

Die Aluminiumdiffusionsschicht wird vorzugsweise mit einem Pulverpackzementieren oder einer Gasphasenabscheidung oder einem Ausdiffundieren aus der Hochtemperaturlackschicht eingebracht, womit die Grundschicht vorteilhaft sauerstoffundurchlässig und damit oxydationsbeständig wird.

Wesentlich kürzere Lager- bzw. Verfahrenszeiten werden mit einem weiteren vorteilhaften Herstellungsverfahren für die diffusionshemmende und oxydationsbeständige Grundschicht dadurch erreicht, daß anstelle der Titanchromat-Titanphosphatschicht mindestens eines der Elemente Molybdän, Tantal, Wolfram, Niob oder Platin auf die Titanoberfläche aufgesputtert oder aufgedampft wird.

Der anorganische Hochtemperaturlack wird vorzugsweise durch Tauchen oder Aufsprühen aufgetragen, da sich diese Verfahren preiswert in eine Massenfertigung integrieren lassen. Anschließend wird vorzugsweise ein Vortrocknen bei 70 - 90 °C für 10 bis 20 Minuten in einem Umluftofen durchgeführt, um die Einbrennzeit zu verringern und ein Aufkochen des anorganischen Hochtemperaturlackes beim Einbrennen zu vermeiden.

Eine bevorzugte Einbrenntemperatur und -dauer liegt zwischen 250 °C und 350 °C für 20 bis 60 Minuten unter Normalatmosphäre. Nach dem Einbrennen ist der Hochtemperaturlack wesentlich beständiger und temperaturfester (bis 800 °C) und bildet eine titanfeuerhemmende Mittelschicht.

Die Deckschicht zur Passivierung der Oberfläche der titanfeuerhemmenden Mittelschicht wird dadurch gebildet, daß zunächst vorzugsweise durch Tauchen oder Spritzen eine Chromphosphat-Koalin-Phosphorsäure-Emulsion aufgetragen wird. Tauchen oder Spritzen sind Herstellungsverfahren, die sich vorteilhaft in der Massenfertigung einsetzen lassen.

Die Emulsion für die Deckschicht besteht vorzugsweise aus 2 Gew.% bis 30 Gew.% Chromphosphat, 3 Gew.% bis 25 Gew.% Koalin, 3 Gew.% bis 30 Gew.% Phosphorsäure und 20 Gew.% bis 70 Gew.% destilliertem Wasser, da mit dieser Mischung eine hochtemperaturfeste und korrosionsfeste Deckschicht erreichbar wird.

Das Trocknen der Chromphosphat-Kaolin-Phosphorsäure-Emulsion wird vorzugsweise nach einem Vortrocknen bei 70- 90 °C für 10 bis 20 Minuten, bei einer Temperatur von 250 bis 350 °C für 20 bis 60 Minuten unter Normalatmosphäre durchgeführt. Ein derartiges Verfahren mit zwei Temperaturstufen hat den Vorteil, daß zunächst die Feuchtigkeit aus dem anorganischen Lack ohne Blasenbildung entweicht und danach die Versiegelung gehärtet wird.

Ein Verfahren zur Herstellung einer Schutzschicht für Titanlegierungen mit einer Deckschicht aus Silikaten oder Titan- oder Siliziumoxiden mit hochtemperaturfesten Pigmenten hat die folgenden zeitlich aufeinanderfolgenden Verfahrensschritte
a) Herstellung einer diffusionshemmenden und oxydationsbeständigen Grundschicht aus Salzen und/oder Metallen,
b) Auftragen des Lackes für eine anorganische Hochtemperaturlackschicht auf Aluminiumbasis,
c) Einbrennen des Lackes für eine anorganische Hochtemperaturlackschicht zu einer titanfeuerhemmenden Mittelschicht,
d) Auftragen einer Dispersion auf Silikat- oder Butyltitanat- oder Silikonharzbasis und hochtemperaturfesten Pigmenten,
e) Trocknen der Dispersion zu einer passivierenden Deckschicht.

Das Verfahren vermindert vorteilhaft den Gehalt an Phosphor in oberflächennahen Bereichen der Schutzschicht und benötigt keine kostenintensiven Anlagen zur Durchführung.

Der Lack zur Bildung einer anorganischen Hochtemperaturlackschicht für die titanfeuerhemmende Mittelschicht besteht wie bei der Grundschicht aus einem Aluminiumpulver als Lackbasis und hat als Binder vorzugsweise Silikate wie Natrium-, Kalium-, Aluminium-, Magnesium-, Zink oder Alkylsilikate oder Butyltitanate oder Silikonharze in einem wässrigen oder organischen Lösungsmittel.

Der Vorteil derartiger Binder für die titanfeuerhemmende Mittelschicht auf Aluminiumbasis liegt darin, daß sie phosphorfrei sind, so daß sich auch in der Mittelschicht keine Phosphorwasserstoffverbindungen bilden oder abspalten können.

Der Lack zur Bildung einer phosphatfreien Hochtemperaturlackschicht wird durch Tauchen oder Aufsprühen aufgetragen, da sich diese Verfahren preiswert in eine Massenfertigung integrieren lassen. Anschließend wird vorzugsweise der phosphatfreie Lack zur Bildung einer anorganischen Hochtemperaturlackschicht bei Raumtemperatur luftgehärtet oder bei Temperaturen von 100 bis 400°C eingebrannt, wobei das Lufthärten den Vorteil hat, daß keine Einbrennöfen erforderlich werden und das Einbrennen den Vorteil besitzt, daß ein Aushärten nach wenigen Minuten erreichbar ist.

Die Deckschicht zur Passivierung der Oberfläche der titanfeuerhemmenden phosphorfreien Mittelschicht wird dadurch gebildet, daß zunächst vorzugsweise durch Tauchen oder spritzen eine Dispersion auf Silikat- oder Butyltitanat- oder Silikonharzbasis und hochtemperaturbeständigen Pigmenten aufgetragen wird. Tauchen oder Spritzen sind Herstellungsverfahren, die sich vorteilhaft in der Massenfertigung einsetzen lassen.

Die Dispersion für die Deckschicht besteht vorzugsweise aus 3 bis 50 Gew.-% hochtemperaturbeständigen Pigmenten, die vorzugsweise mindestens einen Anteil an Kaolin, Aluminiumoxid, Zirkoniumoxid oder Chromoxid aufweisen und aus 2 bis 30 Gew.-% Silikat oder Butyltitanat oder Silikonharz und aus einem Rest Lösungsmittel wie Wasser oder organischem Lösungsmittel bestehen.

Das Trocknen der Dispersion kann durch Lufthärten bei Raumtemperatur für 2 bis 24 Stunden oder durch Einbrennen bei 100°C bis 400°C für 5 Minuten bis 2 Stunden oder durch Vortrocknen bei Raumtemperatur mit anschließendem Einbrennen erfolgen. Ein Verfahren mit zwei Temperaturstufen hat den Vorteil, daß zunächst die Feuchtigkeit aus dem anorganischen lack ohne Blasenbildung entweicht und danach die Versiegelung eingebrannt wird.

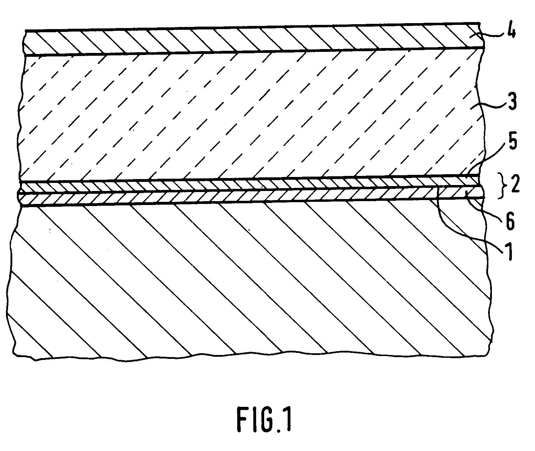

Die nachfolgende Figur 1 zeigt ein Ausführungsbeispiel der erfindungsgemäßen Schutzschicht.

Ein Bauteil aus einer Titanlegierung weist im Bereich seiner Oberfläche 1 eine Grundschicht 2 auf, die in diesem Beispiel aus einer in das Bauteil bis zu 0,7 mm Tiefe eindiffundierten Aluminiumdiffusionsschicht 6 und einer im wesentlichen oberhalb der Oberfläche befindlichen Schicht 5 aus Titanchromat und Titanphosphat von 0,3 µm Dicke besteht.

Auf dieser diffusionshemmenden und oxydationsbeständigen Grundschicht 2 ist eine titanfeuerhemmende Mittelschicht 3 eingebrannt, die im wesentlichen Aluminium mit einem Chromphosphatbinder aufweist. Zum Schutz gegen korrosive Salze, wie beispielsweise Chloride, wird die Oberfläche der titanfeuerhemmenden Schutzschicht 3 von einer Deckschicht 4 aus Chromaten und Phosphaten versiegelt.

Anhand der nachfolgenden zwei Verfahrensbeispiele wird die Erfindung, soweit es das Verfahren zur Herstellung von Schutzschichten auf Bauteilen aus Titanlegierungen betrifft, verdeutlicht.

### Beispiel 1:

Zunächst wird mittels Gasphasenabscheidung eine 0,7 µm tiefe Aluminiumdiffusionsschicht 6 in die Oberfläche 1 eines Bauteils aus einer Titanlegierung in der Weise eingebracht, daß die Titanoberfläche 1 mindestens 50 % Titan nach dem Diffusionsschritt aufweist. Danach wird ein anorganischer Hochtemperaturlack auf Aluminiumbasis, der eine Emulsion aus Aluminiumpulver, Chrom- und Phosphorsäure darstellt, aufgetragen und bei 80 °C für 15 Minuten vorgetrocknet, anschließend für 30 Stunden bei 80 %iger relativer Luftfeuchte in einer Klimakammer Raumtemperatur gelagert. Dabei bildet sich an der Titanoberfläche eine Schicht 5 von 0,3 µm Dicke aus Titanchromat und Titanphosphat. Auf dieser oxydationsbeständigen und diffusionshemmenden Grundschicht 2 wird als nächstes durch erneutes Auftragen und Vortrocknen bei 80 °C und 40 Minuten Dauer die anorganische Hochtemperaturlackschicht verstärkt und für 45 Minuten bei 300 °C eingebrannt, so daß sich eine titanfeuerhemmende Mittelschicht 3 von 500 µm Dicke aus Aluminium mit Chromphosphatbinder bildet.

Bei Raumtemperatur erfolgt zur Vorbereitung der Versiegelung der Oberfläche durch eine Deckschicht 4 ein Auftrag einer Chromphosphat-Kaolin-Phosphorsäure-Emulsion mit 18 Gew.% Chromphosphat, 10 Gew.% Koalin, 22 Gew.% Phosphorsäure und destilliertem Wasser.

Nach einem Vortrocknen für 20 Minuten bei 70 °C wird diese Emulsion bei 350 °C für 20 Minuten getrocknet und damit die Herstellung einer Schutzschicht für Titanlegierungen abgeschlossen.

### Beispiel 2:

Zunächst wird wie im Beispiel 1 eine Grundschicht 2 auf das Bauteil aufgebracht. Auf dieser oxydationsbeständigen und diffusionshemmenden Grundschicht 2 wird als nächstes durch erneutes Auftragen und Vortrocknen bei Raumtemperatur und für 30 Minuten Dauer der Lack zur Bildung einer anorganischen Hochtemperaturlackschicht auf Aluminiumbasis mit einem Kaliumsilikatbinder verstärkt und für 45 Minuten bei 350°C eingebrannt, so daß sich eine titanfeuerhemmende Mittelschicht 3 von 500µm Dicke aus Aluminium mit Aluminiumsilikat bildet.

Bei Raumtemperatur erfolgt zur Vorbereitung der Versiegelung der Oberfläche durch eine Deckschicht 4 ein Auftrag einer Natriumsilikat-Kaolin-Wasserdispersion mit 15 Gew.-% Natriumsilikat, 5 Gew.-% Kaolin und Rest destilliertem Wasser.

Nach einem Vortrocknen für 20 Minuten bei Raumtemperatur wird diese Dispersion bei 220°C für 20 Minuten eingebrannt und damit die Herstellung einer Schutzschicht für Titanlegierungen abgeschlossen.

### Beispiel 3:

Zunächst wird eine diffusionshemmende Schicht aus 50 Gew.-% Niob und 50 Gew.% Platin unmittelbar auf die Oberfläche eines Bauteils aus einer Titanlegierung zu einer Dicke von 0,3µm aufgesputtert.

Anschließend wird auf die Grundschicht 2 ein anorganischer Hochtemperaturlack aus Aluminiumpulver, das in einer Lösung von 5 Gew.-% Chromsäure, 20 Gew.-% Phosphorsäure, 25 Gew.-% Chromphosphat und 3 Gew.-% Aluminiumphosphat emulgiert ist, aufgetragen und bei 80°C für 15 Minuten vorgetrocknet.

Bei 300 °C für 45 Minuten wird der Hochtemperaturlack in einem Umluftofen eingebrannt, so daß eine 50 µm Dicke titanfeuerhemmende Schicht entsteht. Die abschließende passivierende Deckschicht wird wie in Beispiel 1 hergestellt.

### Beispiel 4:

Zunächst wird eine diffusionshemmende Schicht aus 50 Gew.-% Niob und 50 Gew.-% Platin unmittelbar auf die Oberfläche eines Bauteils aus einer Titanlegierung zu einer Dicke von 0,3µm aufgesputtert.

Anschließend wird auf die Grundschicht 2 ein Lack zur Bildung einer anorganischen Hochtemperaturlackschicht aus 50 Gew.-% Aluminiumpulver, das in einer Lösung von 15 Gew.-% Kaliumsilikat und Rest Wasser dispergiert ist, aufgetragen und bei Raumtemperatur für 15 Minuten vorgetrocknet.

Bei 300°C für 30 Minuten wird der Hochtemperaturlack in einem Umluftofen eingebrannt, so daß eine 50µm Dicke titanfeuerhemmende Schicht entsteht. Die abschließende passivierende Deckschicht wird wie in Beispiel 1 hergestellt.

### Beispiel 5:

Zur Bildung einer diffusionshemmenden Grundschicht 2 wird ein Hochtemperaturlack mit einem Chromphosphatbinder auf das Bauteil aufgetragen und bei 90% Luftfeuchtigkeit zur Bildung einer Schicht aus Titanchromat und Titanphosphat auf der Titanoberfläche für 24 Stunden gelagert. Die Herstellung der Mittelschicht 3 und der Deckschicht 4 folgt entsprechend einem der Beispiele 1 bis 4.

## Patentansprüche

1. Bauteil aus einer Titanlegierung mit einer Schutzschicht gekennzeichnet durch eine auf der Bauteiloberfläche (1) befindliche diffusionshemmende und oxidationsbeständige Grundschicht (2) aus Metallen und/oder Salzen, eine darüberliegende, titanfeuerhemmende Mittelschicht (3) aus einem Hochtemperaturlack auf Aluminiumbasis und eine passivierende Deckschicht (4)

2. Bauteil nach Anspruch 1, dadurch gekennzeichnet, daß die Deckschicht aus Chromphosphat besteht.

3. Bauteil nach Anspruch 1, dadurch gekennzeichnet, daß die Deckschicht aus Silikaten oder Titan- oder Siliziumoxiden mit hochtemperaturfesten Pigmenten besteht.

4. Bauteil nach einem der Ansprüche 1 bis 3 dadurch gekennzeichnet, daß die Grundschicht (2) als Metalle intermetallische Verbindungen, vorzugsweise TiAl₃ aufweist.

5. Bauteil nach einem der Ansprüche 1 bis 4, dadurch gekennzeichnet, daß die Grundschicht (2) als Salze Titanphosphate und Titanchromate aufweist.

6. Bauteil nach einem der Ansprüche 1 bis 3, dadurch gekennzeichnet, daß die Grundschicht (2) aus mindestens einem der Elemente Molybdän, Tantal, Wolfram, Palladium, Niob oder Platin besteht.

7. Bauteil nach einem der Ansprüche 1 bis 6, dadurch gekennzeichnet, daß die Grundschicht (2) 0,2 bis 10 µm vorzugsweise 0,2 bis 2 µm dick ist.

8. Verfahren zur Herstellung eines Bauteils aus einer Titanlegierung mit einer Schutzschicht nach Anspruch 2, das durch folgende Verfahrensschritte gekennzeichnet ist:
a) Herstellung einer diffusionshemmenden und oxydationsbeständigen Grundschicht (2) aus Salzen und/oder Metallen auf der Bauteiloberfläche,
b) Auftragen einer anorganischen Hochtemperaturlackschicht auf Aluminiumbasis,
c) Einbrennen der anorganischen Hochtemperaturlackschicht zu einer titanfeuerhemmenden Mittelschicht (3),
d) Auftragen einer Chromphosphat-Kaolin-Phosphorsäure-Emulsion,
e) Trocknen der Chromphosphat-Kaolin-Phosphorsäure-Emulsion zu einer passivierenden Deckschicht (4).

9. Verfahren zur Herstellung eines Bauteils aus einer Titanlegierung mit einer Schutzschicht nach Anspruch 3, das durch folgende Verfahrensschritte gekennzeichnet ist:
a) Herstellung einer diffusionshemmenden und oxydationsbeständigen Grundschicht (2) aus Salzen und/oder Metallen auf der Bauteiloberfläche (I),
b) Auftragen eines Lackes für eine anorganische Hochtemperaturlackschicht auf Aluminiumbasis,
c) Einbrennen des Lackes für eine anorganische Hochtemperaturlackschicht zu einer titanfeuerhemmenden Mittelschicht (3),
d) Auftragen einer Disperion auf Silikat- oder Butyltitanat- oder Silikonharzbasis und hochtemperaturbeständigen Pigmenten,
e) Trocknen der Dispersion zu einer passivierenden Deckschicht (4).

10. Verfahren nach einem der Ansprüche 8 oder 9 , dadurch gekennzeichnet, daß zur Herstellung der Grundschicht (2) zunächst eine Aluminiumdiffusionsschicht (6) eingebracht wird und anschließend eine anorganische Hochtemperaturlackschicht auf Aluminiumbasis mit einem Binder aus Chromphosphat und Aluminiumphosphat gelöst in einer wässrigen Lösung von Chrom -und Phosphorsäure aufgetragen und bei 70 % bis 90 % Luftfeuchtigkeit gelagert wird zur Bildung einer Schicht (5) an der Titanoberfläche, die Titanchromat und Titanphosphat enthält.

11. Verfahren nach Anspruch 10, dadurch gekennzeichnet, daß die Aluminiumdiffusionsschicht (6) der Grundschicht (2) vorzugsweise durch Pulverpackzementieren oder Gasphasenabscheidung oder Ausdiffusion aus der Hochtemperaturlackschicht eingebracht wird.

12. Verfahren nach Anspruch 10, dadurch gekennzeichnet, daß die anorganische Hochtemperaturlackschicht mit einem Chromsäure-Phosphorsäure-Binder für 10 bis 20 Minuten bei 70 - 90 °C vorgetrocknet wird und für 8 bis 60 Stunden bei einer Temperatur von Raumtemperatur bis 100 °C unter 70 % bis 90 % Luftfeuchtigkeit gelagert wird.

13. Verfahren nach Anspruch 8 oder 9, dadurch gekennzeichnet, daß zur Herstellung der Grundschicht (2) mindestens eines der Elemente Molybdän, Tantal, Palladium, Wolfram, Niob oder Platin auf die Titanoberfläche aufgesputtert oder aufgedampft wird.

14. Verfahren nach einem der Ansprüche 8 bis 13, dadurch gekennzeichnet, daß der Lack für Hochtemperaturlackschicht auf Aluminiumbasis mit einem Silikat- oder Butyltitanat- oder Silikonharzbinder bei Raumtemperatur mittels Tauchen oder Aufsprühen aufgetragen wird.

15. Verfahren nach einem der Ansprüche 8 bis 13, dadurch gekennzeichnet, daß der Lack zur Bildung einer Hochtemperaturlackschicht bei Raumtemperatur luftgehärtet und/oder bei Temperaturen von 100 bis 400°C eingebrannt wird.

16. Verfahren nach Anspruch 8, dadurch gekennzeichnet, daß die Chromphosphat-Kaolin-Phosphorsäure-Emulsion aus 2 Gew.-% bis 30 Gew.-% Chromphosphat, 3 Gew.-% bis 25 Gew.-% Kaolin, 3 Gew.-% bis 30 Gew.-% Phosphorsäure und 20 Gew.-% bis 70 Gew.-% destilliertem Wasser besteht.

17. Verfahren nach Anspruch 9, dadurch gekennzeichnet, daß eine Dispersion aus 2 bis 30 Gew.-% Silikat- oder Butyltitanat- oder Silikonharzbinder mit 3. bis 50 Gew.-% hochtemperaturfesten Pigmenten, die vorzugsweise mindestens eines der Substanzen Kaolin, Aluminiumoxid, Zirkoniumoxid, Magnesiumoxid oder Chromoxid enthalten und einem Rest Lösungsmittel eingesetzt wird.

## Claims

1. A component of a titanium alloy with a protective layer characterised by a base layer (2) of metals and/or salts, located on the component surface (1), and inhibiting diffusion and resistant to oxidation, a middle layer (3) lying thereover, which inhibits titanium fire, of a high-temperature varnish based on aluminium and a passivating top layer (4).

2. A component according to claim 1, characterised in that the top layer consists of chromium phosphate.

3. A component according to claim 1, characterised in that the top layer consists of silicates or titanium or silicon oxides with pigments resistant to high temperatures.

4. A component according to one of claims 1 to 3 characterised in that the base layer (2) has intermetallic compounds, preferably TiAl₃ as metals.

5. A component according to one of claims 1 to 4, characterised in that the base layer (2) has titanium phosphates and titanium chromates as salts.

6. A component according to one of claims 1 to 3, characterised in that the base layer (2) consists of at least one of the elements molybdenum, tantalum, tungsten, palladium, niobium or platinum.

7. A component according to one of claims 1 to 6, characterised in that the base layer (2) is 0.2 to 10 µm preferably 0.2 to 2 µm thick.

8. A method for producing a component of a titanium alloy with a protective layer according to claim 2, which is characterised by the following method steps:
a) producing a base layer (2) of salts and/or metals on the component surface, which inhibits diffusion and is resistant to oxidation,
b) applying an inorganic high-temperature varnish layer based on aluminium,
c) burning the inorganic high-temperature varnish to form a middle layer (3) inhibiting titanium fire,
d) applying a chromium-phosphate/kaolin/ phosphoric-acid emulsion,
e) drying the chromium-phosphate/kaolin/ phophoric-acid emulsion to form a passivating top layer (4).

9. A method for producing a component of a titanium alloy with a protective layer according to claim 3, which is characterised by the following method steps:
a) producing a base layer (2) of salts and/or metals, on the component surface (1), which inhibits diffusion and is resistant to oxidation,
b) applying a varnish for an inorganic high-temperature varnish layer based on aluminium,
c) burning the varnish for an inorganic high-temperature varnish layer to form a middle layer (3) inhibiting titanium fire,
d) applying a dispersion of silicate or butyl titanate or silicone resin base and pigments resistant to high temperatures,
e) drying the dispersion to form a passivating top layer (4).

10. A method according to one of claims 8 or 9, characterised in that for producing the base layer (2) firstly an aluminium diffusion layer (6) is introduced and then an inorganic high-temperature varnish layer based on aluminium with a binder of chromium phosphate and aluminium phosphate dissolved in an aqueous solution of chromic acid and phosphoric acid is applied and stored at 70% to 90% air humidity to form a layer (5) on the titanium surface which contains titanium chromate and titanium phosphate.

11. A method according to claim 10, characterised in that the aluminium diffusion layer (6) of the base layer (2) is introduced preferably by powder-pack cementing or gas phase deposition or diffusing out from the high-temperature varnish layer.

12. A method according to claim 10, characterised in that the inorganic high-temperature varnish layer is predried with a chromic-acid/ phosphoric-acid binder for 10 to 20 minutes at 70-90°C and stored for 8 to 60 hours at a temperature from room temperature up to 100°C, with 70% to 90% air humidity.

13. A method according to claim 8 or 9, characterised in that for producing the base layer (2) at least of one of the elements molybdenum, tantalum, palladium, tungsten, niobium or platinum is sputtered or vaporising onto the titanium surface.

14. A method according to one of claims 8 to 13, characterised in that the varnish for the high-temperature varnish layer based on aluminium is applied with a silicate or butyl titanate or silicone resin binder at room temperature by means of immersion or spraying.

15. A method according to one of claims 8 to 13, characterised in that the varnish for forming a high-temperature varnish layer is air-hardened at room temperature and/or burnt in at temperatures of 100 to 400°C.

16. A method according to claim 8, characterised in that the chromium-phosphate/kaolin/phosphoric-acid emulsion consists of 2% by weight to 30% by weight chromium phosphate, 3% by weight to 25% by weight kaolin, 3% by weight to 30% by weight phosphoric acid and 20% by weight to 70% by weight distilled water.

17. A method according to claim 9, characterised in that a dispersion is used of 2 to 30% by weight silicate or butyl titanate or silicone resin binder with 3 to 50% by weight pigments which are resistant to high temperatures, which preferably contain at least one of the substances kaolin, aluminium oxide, zirconium oxide, magnesium oxide or chromium oxide and a residue of solvent.

## Revendications

1. Elément de construction en un alliage de titane comportant une couche protectrice, caractérisé par une couche de fond (2) à base de métaux et/ou de sels, empêchant la diffusion et résistante à l'oxydation, se trouvant sur la surface (1) de l'élément de construction, une couche intermédiaire (3) sus-jacente, ignifuge pour le titane, constituée d'une peinture à base d'aluminium, résistante à hautes températures, et une couche passivante (4) de recouvrement.

2. Elément de construction selon la revendication 1, caractérisé en ce que la couche de recouvrement est constituée de phosphate de chrome.

3. Elément de construction selon la revendication 1, caractérisé en ce que la couche de recouvrement est constituée de silicates ou d'oxydes de titane ou de silicium avec des pigments résistants à hautes températures.

4. Elément de construction selon l'une des revendications 1 à 3, caractérisé en ce que la couche de fond (2) comporte en tant que métaux des composés intermétalliques, de préférence TiAl₃.

5. Elément de construction selon l'une des revendications 1 à 4, caractérisé en ce que la couche de fond (2) comporte en tant que sels des phosphates de titane et des chromates de titane.

6. Elément de construction selon l'une des revendications 1 à 3, caractérisé en ce que la couche de fond (2) est constituée d'au moins l'un des éléments molybdène, tantale, tungstène, palladium, niobium ou platine.

7. Elément de construction selon l'une des revendications 1 à 6, caractérisé en ce que la couche de fond (2) a une épaisseur de 0,2 à 10 µm, de préférence de 0,2 à 2 µm.

8. Procédé pour la fabrication d'un élément de construction à base d'un alliage de titane, comportant une couche protectrice selon la revendication 2, caractérisé par les étapes de procédé suivantes:
a) préparation d'une couche de fond (2) à base de métaux et/ou de sels, sur la surface de l'élément de construction, empêchant la diffusion et résistante à l'oxydation,
b) application d'une couche de peinture minérale résistante à hautes températures, à base d'aluminium,
c) cuisson de la couche de peinture minérale résistante à hautes températures, pour la formation d'une couche intermédiaire (3) ignifuge pour le titane,
d) application d'une émulsion de phosphate de chrome-kaolin-acide phosphorique,
e) séchage de l'émulsion de phosphate de chrome-kaolin-acide phosphorique, pour la formation d'une couche passivante (4) de recouvrement.

9. Procédé pour la fabrication d'un élément de construction à base d'un alliage de titane, comportant une couche protectrice selon la revendication 3, caractérié par les étapes de procédé suivantes:
a) préparation d'une couche de fond (2) à base de métaux et/ou de sels, sur la surface (1) de l'élément de construction, empêchant la diffusion et résistante à l'oxydation,
b) application d'une peinture pour formation d'une couche de peinture minérale résistante à hautes températures, à base d'aluminium,
c) cuisson de la peinture pour formation d'une couche de peinture minérale résistante à hautes températures, conduisant à une couche intermédiaire (3) ignifuge pour le titane,
d) application d'une dispersion à base de titanate de butyle ou de silicate ou de résine silicone et de pigments résistants à hautes températures,
e) séchage de la dispersion, pour la formation d'une couche passivante (4) de recouvrement.

10. Procédé selon l'une des revendications 8 et 9, caractérisé en ce que, pour la formation de la couche de fond (2), on applique d'abord une couche (6) de diffusion d'aluminium et on applique ensuite une couche de peinture minérale résistante à hautes températures, à base d'aluminium, dissoute avec un liant à base de phosphate de chrome et de phosphate d'aluminium, dans une solution aqueuse d'acide chromique et d'acide phosphorique, et on la met en présence de 70 à 90 % d'humidité de l'air, pour la formation, sur la surface du titane, d'une couche (5) qui contient du chromate de titane et du phosphate de titane.

11. Procédé selon la revendication 10, caractérisé en ce que la couche de diffusion d'aluminium (6) de la couche de fond (2) est appliquée de préférence par cémentation de poudre ou dépôt en phase gazeuse ou diffusion à partir de la couche de peinture résistante à hautes températures.

12. Procédé selon la revendication 10, caractérisé en ce que la couche de peinture minérale résistante à hautes températures, comportant un liant à base d'acide chromique/ acide phosphorique, est préséchée à 70-90°C et placée pendant 8 à 60 heures à une température dans la plage allant de la température ambiante à 100°C, et à 70 à 90 % d'humidité de l'air.

13. Procédé selon la revendication 8 ou 9, caractérisé en ce que, pour la formation de la couche de fond (2), on applique sur la surface de titane, par pulvérisation cathodique ou par dépôt en phase vapeur, au moins un des éléments molybdène, tantale, palladium, tungstène, niobium ou platine.

14. Procédé selon l'une des revendications 8 à 13, cartactérisé en ce que la peinture pour la couche de peinture résistante à hautes températures, à base d'aluminium avec un liant à base de titanate de butyle ou de silicate ou de résine silicone, est appliquée à la température ambiante, par trempage ou pistolage.

15. Procédé selon l'une des revendications 8 à 13, cartactérisé en ce que la peinture pour la formation d'une couche de peinture résistante à hautes températures est durcie à l'air à la température ambiante et/ou soumise à une cuisson à des températures de 100 à 400°C.

16. Procédé selon la revendication 8, caractérisé en ce que l'émulsion de phosphate de chrome-kaolin-acide phosphorique est constituée de 2 à 30 % en poids de phosphate de chrome, 3 à 25 % en poids de kaolin, 3 à 30 % en poids d'acide phosphorique et 20 à 70 % en poids d'eau distillée.

17. Procédé selon la revendication 9, cartactérisé en ce que l'on utilise une dispersion de 2 à 30 % en poids de liant à base de titanate de butyle ou de silicate ou de résine silicone, avec 3 à 50 % en poids de pigments résistants à hautes températures, qui contiennent de préférence au moins l'une des substances kaolin, oxyde d'aluminium, oxyde de zirconium, oxyde de magnésium ou oxyde de chrome et un reste de solvant.
